# EUROPEAN PATENT SPECIFICATION

(11) **EP 0 606 784 B1**
(45) Date of publication and mention of the grant of the patent: **15.10.1997**
(21) Application number: 93400083.7
(22) Date of filing: 13.01.1993
(51) Int. Cl.: H04N 11/18

(54) **Method and apparatus for improved SECAM encoding**
Methode und Vorrichtung für verbesserte SECAM-Kodierung
Méthode et appareil pour encodage SECAM amélioré

(43) Date of publication of application: 20.07.1994
(73) Proprietor: THOMSON multimedia, 92400 Courbevoie (FR)
(72) Inventor: Boie, Werner, F-67100 Strasbourg (FR)
(74) Representative: Hartnack, Wolfgang, Dipl.-Ing.

(56) References cited:
- EP-A- 0 333 480
- FR-A- 2 509 933
- US-A- 4 100 568
- DATABASE WPIL Section Ch, Week 8844, Derwent Publications Ltd., London, GB; AN 88-313837 & SU-A-1 392 639

## Description

The present invention relates to a method and to an apparatus for improved SECAM encoding.

### Background

At present, the SECAM standard offers only a poor picture quality. The degradations in the pictures are numerous. One of the most disturbing artefact concerns the cross talk between luminance and chrominance in the transmission channel. Compared to other TV standards SECAM has not been significantly improved since it was introduced as a third world-wide TV standard.

### Invention

It is one object of the invention to disclose a method for improving the SECAM picture quality by means of a proper preprocessing at transmitter side. This object is reached by the method disclosed in claim 1.

It is a further object of the invention to disclose an apparatus which utilises the inventive method. This object is reached by the apparatus disclosed in claim 7.

It is partly impossible to eliminate the artefacts mentioned above by digital signal processing only at receiver side. In PAL and NTSC a solution for a sensible Y/C separation is a more or less straightforward due to the frequency combing of the luminance and the encoded chrominance. On contrast, the FM modulation of the chrominance signals in the SECAM standard has been an insurmountable obstacle for an improved Y/C separation in the past. In more detail, the "unpredictable" frequency allocation of the FM modulated chrominance signals and the missing phase correlation with the neighbouring lines makes impossible a proper pre- and postfiltering in order to avoid cross talk effects. Only if there is a chance that all frequency regions can be unambiguously allocated to the luminance and the FM modulated chrominance signals, a pre- and postfiltering concept becomes sensible. In principle, the problem of the Y/C separation is solved, if different frequency regions in the spatio-temporal frequency spectrum can be allocated to the luminance and the FM modulated chrominance. Unfortunately, these regions are more or less defined by the SECAM standard and they overlap each other to great deal. A major change in the frequency allocation is therefore not possible for compatibility reasons. Consequently, the proposed modification may only affect the standard in cases in which the standard decoder in the receiver supplies anyhow unacceptable results or does not make any use of the transmitted information. This holds especially for the cross colour artefacts.

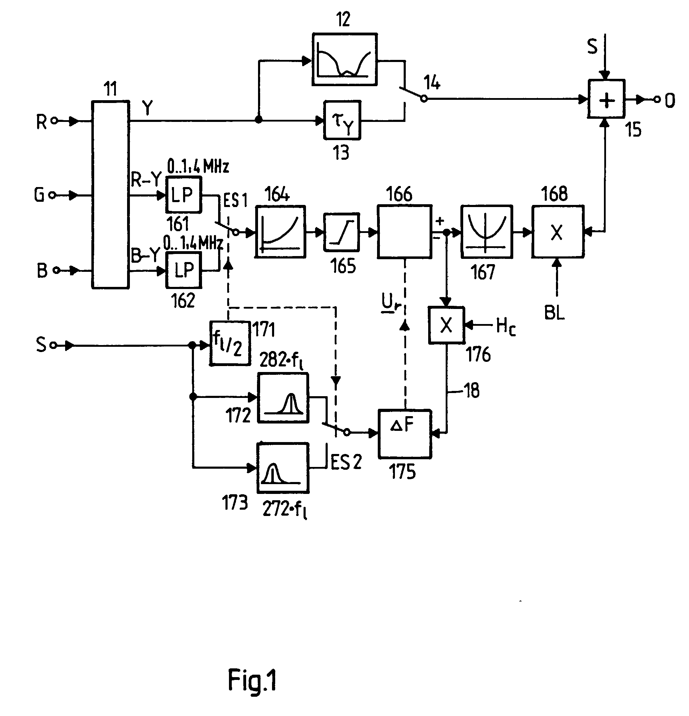

The most important point in the processing chain of the SECAM standard, determining the frequency allocation of the encoded chrominance, is represented by the FM modulator (see the example for a conventional SECAM encoder in Fig. 1). Itself can be decomposed into a weighted (temporal) integrator of the input signal - here, chrominance signals Dᵣ and D_{b} - and a cosine function realised by a LUT (look-up-table). Between these two processing blocks one can find the current phase of the FM modulated signal (FM subcarrier). This signal plays an important role in the invention.

Under the assumption that periodical patterns consisting of high spatial frequency components of luminance (this could be a striped shirt or a fence in the background of a picture) normally do not contain somewhat smaller spatial chrominance frequency components, these spatial chrominance frequency components can be set to zero. In a system with a proper chrominance prefiltering this will be done anyway by the prefilter. The consequence would then be in the ideal case, that the frequency of the FM modulator output signal will be constant in these regions, and since the absolute phase of the FM subcarrier for a certain pixel has no direct influence on the decoded chrominance signals, the phase can be changed smoothly at the beginning and the end of the pattern in such a way that the FM subcarrier gets a defined structure in vertical direction. This would help to find and facilitate a respective selection process (postfiltering) for the chrominance or luminance in the receiver.

Consequently, the frequency region occupied by this special structure has to be reserved only for the FM modulated chrominance signals, the luminance must not be transmitted in the same frequency region. Advantageously, this corresponds to the preferred pre- and postfiltering concept. Furthermore, it is conceivable that the FM modulated chrominance signals describe exactly the periodical pattern which is intended to be transmitted in the luminance channel. In this case, the decoder would not be possible to make a difference between the luminance and the FM modulated chrominance and therefore produce a strong cross talk. Here again a measure has to be taken in the proposed FM modulator to avoid this event. The critical chrominance signals leading to these patterns are again more or less constant in a certain picture area and it would therefore also be possible to modify the phase of the FM subcarrier in such a way that it will not be mis-interpreted by the decoder.

In principle the inventive method consists in improved SECAM encoding, wherein a FM modulator modulates chrominance signals on colour carriers, comprising the following steps:
- said chrominance signals are temporally integrated and combined with a modified phase correcting signal and then control digitally modulation means which output FM modulated chrominance signals;
- the combined chrominance signals are delayed by two lines and phase shifted by an amount of π;
- the temporally integrated chrominance signals are subtracted from the delayed and phase shifted combined chrominance signals and form a phase correcting signal;
- this phase correcting signal and an input signal 'zero' are soft switched under the control of cross colour detector means which operate on the luminance of the SECAM signal, wherein the soft switching output is said modified phase correcting signal.

Advantageous additional embodiments of the inventive method are resulting from the respective dependent claims.

In principle the inventive apparatus for improved SECAM encoding, wherein a FM modulator modulates chrominance signals on colour carriers, comprises:
- temporal integrator means and subsequent combining means in which said chrominance signals are temporally integrated and combined with a modified phase correcting signal and then control digitally modulation means which output FM modulated chrominance signals;
- delay means and phase shift means in which the combined chrominance signals are delayed by two lines and phase shifted by an amount of π;
- subtracting means in which the temporally integrated chrominance signals are subtracted from the delayed and phase shifted combined chrominance signals and form a phase correcting signal;
- soft switch means in which this phase correcting signal and an input signal 'zero' are soft switched under the control of cross colour detector means which operate on the luminance of the SECAM signal, wherein the output signal of said soft switch means is said modified phase correcting signal.

Advantageous additional embodiments of the inventive apparatus are resulting from the respective dependent claims.

### Drawings

Preferred embodiments of the invention are described with reference to the accompanying drawings, which show in:
- Fig. 1: known SECAM encoder;
- Fig. 2: inventive FM modulator with constrained phase relationships;
- Fig. 3: principle of cross colour detection and subcarrier retrieval.

### Preferred embodiments

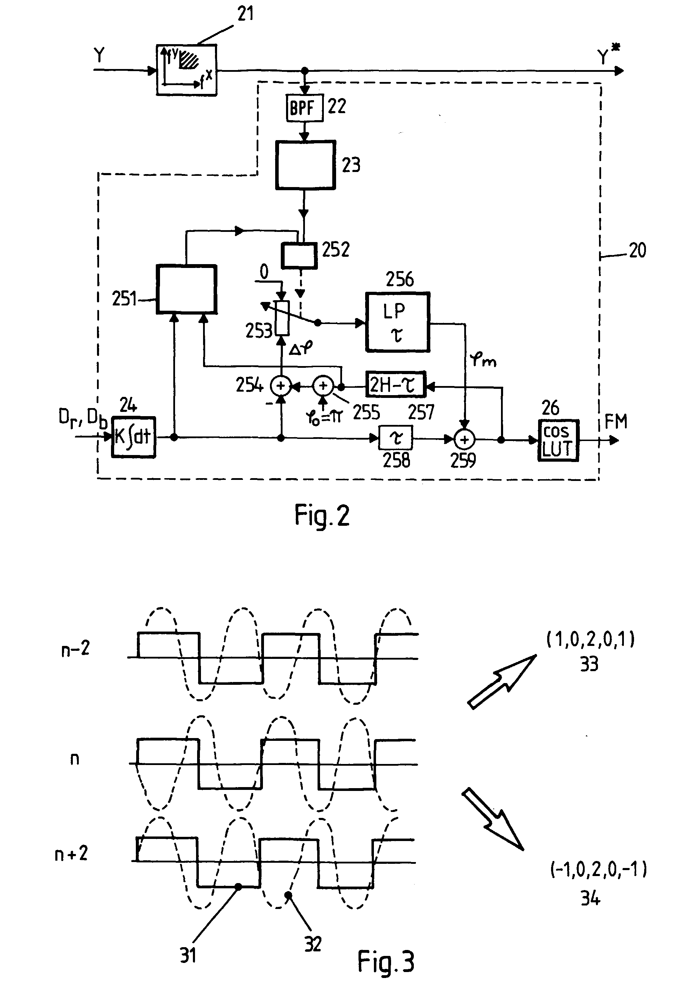

A matrix 11 in Fig. 1 receives RGB signals and outputs the luminance signal Y and the chrominance signals R-Y and B-Y. Signal Y passes either through a notch filter 12 or a processing time match delay 13, one output of which is connected (represented by switch 14) to the first input of an adder 15 which outputs the coded SECAM signal.
The chrominance signals R-Y and B-Y are band limited to 1.4MHz in respective lowpass filters 161 and 162 and line alternately fed via an electronic switch ES1 to a video pre-emphasis circuit 164, the output of which passes through a limiter 165, an FM modulator 166, a high-frequency pre-emphasis circuit 167 and a blanking inserter 168 (receiving the blanking information BL) and is added in adder 15 to the filtered/delayed Y signal together with the sync signal S.
The sync signal S is also fed to a frequency divider 171 generating half the line frequency fl, to a first quartz band filter 172 having a center frequency of 282*f1 (red) and to a second quartz band filter 173 having a center frequency of 272*f1 (blue). The output of filters 172 and 173 are line alternately fed via an electronic switch ES2 to a ΔF-discriminator.
Switches ES1 and ES2 are controlled by the output of frequency divider 171.
The output signal of the FM modulator 166 is fed to the second input of the ΔF-discriminator, gated by a gate circuit 176 at the beginning of the lines and using a respective gate signal H_{C}. The output signal of circuit 176 represents the restored colour frequency. By the control voltage Uᵣ (DC), representing the difference between the output frequencies of switch ES2 and circuit 176, the ΔF-discriminator controls FM modulator 166.
The modified FM modulator 20 in Fig. 2 illustrates the inventive processing of the FM modulator 166 with constrained phase relation ship. Advantageously, this FM modulator 20 works together with a luminance prefilter 21 incorporated in a standard SECAM encoder.
The SECAM encoder of Fig. 2 is a digital one in order to allow a precise manipulation of the subcarrier phase which will be described below.
The luminance prefilter 21 (input signal Y, output signal Y*) inserted in the luminance path of the SECAM encoder suppresses high diagonal spatial frequencies, which will on one hand not have a significant influence on the total picture quality due to the oblique effect and on the other hand allow to reserve a frequency region mostly occupied by the FM modulated chrominance signals.
A certain risk for the emergence of cross colour is therefore only given by high horizontal frequency patterns. A bandpass filter 22 at the output of prefilter 21, the width of which is corresponding to the bandpass filter width in SECAM decoders, is used in combination with a subsequent cross colour detector 23 to select and detect these frequency components. The output signal of this cross colour detector controls via a maximum value circuit 252 a soft switch 253 which operates on a phase correcting signal Δϕ described below.
The incoming chrominance signals Dᵣ and D_{b}, respectively (corresponding to signal Uᵣ.in Fig. 1), of the FM modulator 20 are at first subjected to a temporal integration circuit 24, representing the first stage of a conventional FM modulator. After a delay τ in a delay circuit 258 and after the superposition of a modified phase correcting signal ϕₘ in an adder 259 the temporally integrated chrominance signal enters a cosine look-up table 26 (LUT) which completes the FM modulation process (output signal FM).
Prior to cosine LUT 26, the signal is taped by feeding it back over a two-line delay 257 with a delay time of 2∗H-τ. This delay is necessary to carry out the phase manipulation on the same chrominance component only and not to mix up both components. In a subsequent phase shifter 255 a phase of ϕ₀ = π is added. In a subtractor 254 the output signal of temporal integration circuit 24 is subtracted from the output signal of shifter 255, thereby creating the phase correcting signal Δϕ to be controlled by the soft switch 253 mentioned before. The second input of soft switch 253 is connected to ground.
In order to avoid phase jumps in the FM modulated signal, the correcting signal at the output of switch 253 has to be strongly smoothed by a lowpass filter 256 which causes a delay of τ. The resulting signal forms the modified phase correcting signal ϕₘ, which also should settle down to zero (using soft switch 253) outside the detected cross colour region or in the transition region of the chrominance signal.
On the other hand, if no potential cross colour is detected and the FM modulator describes a periodical pattern which corresponds to a potentially transmitted luminance signal, the resulting phase has to be manipulated in the same way. Therefore, the soft switch 253 is then controlled by an equal phase detector 251 comparing the current phase coming from integrator 24 to the phase two video lines before at the output of delay 257.

At receiver side, in principle, a SECAM decoder with improved Y/C separation can be used as is described in EP-A-0 597 160, but this decoder can only detect cross colour if the amplitude of the luminance pattern exceeds the amplitude of the FM subcarrier. If the amplitude of the luminance pattern is of the same order as the FM subcarrier, no safe decision can be made. The cross colour detector is therefore disabled. Together with the inventive pre-processing of the phase in the FM modulator the detector range of the cross colour detector in the SECAM decoder can be significantly increased. That means, in case of ideal transmission conditions cross colour could be detected as soon as a high frequency luminance pattern is transmitted.

Fig. 3 will illustrate this principle with an example of three succeeding lines n-2, n and n+2 of the same encoded chrominance component. The luminance signal 31 and the FM subcarrier 32 are shown. Evidently, a lowpass filtering 33 having e.g. the coefficients (1,0,2,0,1) supplies only the luminance component and allows therefore a precise cross colour detection, while a high-pass filtering 34 using e.g. the coefficients (-1,0,2,0,-1) allows a luminance suppression in connection with a correct FM subcarrier selection. The SECAM decoder will also need a postfilter in the luminance branch for suppressing the high diagonal frequency components which carry the chrominance information.

The presented invention allows a compatible modification of the SECAM standard in order to introduce a pre- and postfiltering concept. By means of a cross colour detector at transmitter and receiver side which is combined with a pre- and postfilter for suppressing high diagonal luminance frequency components and by a phase constrained FM modulator 20, a cross talk free signal reproduction with increased horizontal resolution can be achieved.

## Claims

1. Method for improved SECAM encoding, wherein a FM modulator (166, 20) modulates chrominance signals (Dᵣ, D_{b}) on colour carriers, **characterised in** the following steps:
- said chrominance signals (Dᵣ, D_{b}) are temporally integrated (24) and combined (259) with a modified phase correcting signal (ϕₘ) and then control digitally modulation means (26) which output FM modulated chrominance signals (FM);
- the combined (259) chrominance signals are delayed (257) by two lines and phase shifted by an amount of π;
- the temporally integrated (24) chrominance signals are subtracted (254) from the delayed (257) and phase shifted (255) combined chrominance signals and form a phase correcting signal (Δϕ);
- this phase correcting signal and an input signal 'zero' are soft switched (253) under the control of cross colour detector means (23) which operate on the luminance (Y) of the SECAM signal, wherein the soft switching output is said modified phase correcting signal (ϕₘ).

2. Method according to claim 1, **characterised in** that said soft switching (253) is also controlled by equal phase detector means (251), the input signals of which are said temporally integrated (24) chrominance signals and said delayed (257) and combined (259) chrominance signals.

3. Method according to claim 1 or 2, **characterised in** that said modified phase correcting signal (ϕₘ) is lowpass filtered (256), whereby phase jumps are removed.

4. Method according to any of claims 1 to 3, **characterised in** that said luminance signal (Y) is bandpass filtered (22) prior to entering said cross colour detector means (23).

5. Method according to any of claims 1 to 4, **characterised in** that said luminance signal (Y) is prefiltered (21) by suppressing high diagonal spatial frequencies.

6. Method according to any of claims 1 to 5, **characterised in** that in a subsequent SECAM decoding a postfiltering with a characteristic corresponding to said prefiltering (21) is carried out.

7. Apparatus for improved SECAM encoding, wherein a FM modulator (166, 20) modulates chrominance signals (Dᵣ, D_{b}) on colour carriers, related to a method according to any of claims 1 to 6, and comprising:
- temporal integrator means (24) and subsequent combining means (259) in which said chrominance signals (Dᵣ, D_{b}) are temporally integrated and combined with a modified phase correcting signal (ϕₘ) and then control digitally modulation means (26) which output FM modulated chrominance signals (FM);
- delay means (257) and phase shift means (255) in which the combined (259) chrominance signals are delayed by two lines and phase shifted by an amount of π;
- subtracting means (254) in which the temporally integrated (24) chrominance signals are subtracted from the delayed (257) and phase shifted (255) combined chrominance signals and form a phase correcting signal (Δϕ);
- soft switch means (253) in which this phase correcting signal and an input signal 'zero' are soft switched under the control of cross colour detector means (23) which operate on the luminance (Y) of the SECAM signal, wherein the output signal of said soft switch means is said modified phase correcting signal (ϕₘ).

8. Apparatus according to claim 7, **characterised in** that said soft switch means (253) are also controlled by equal phase detector means (251), the input signals of which are said temporally integrated (24) chrominance signals and said delayed (257) and combined (259) chrominance signals.

9. Apparatus according to claim 7 or 8, **characterised in** that said modified phase correcting signal (ϕₘ) is filtered in lowpass filter means (256), whereby phase jumps are removed.

10. Apparatus according to any of claims 7 to 9, comprising bandpass filter means (22) in which said luminance signal (Y) is bandpass filtered prior to entering said cross colour detector means (23).

11. Apparatus according to any of claims 7 to 10, comprising pre-filter means (21) in which said luminance signal (Y) is pre-filtered by suppressing high diagonal spatial frequencies.

## Patentansprüche

1. Verfahren für eine verbesserte SECAM-Kodierung, bei dem ein FM-Modulator (166, 20) Chrominanzsignale (Dᵣ, D_{b}) auf Farbträger moduliert,
gekennzeichnet durch die folgenden Schritte:
- die Chrominanzsignale (Dᵣ, D_{b}) werden zeitlich integriert (24) und mit einem modifizierten Phasenkorrektursignal (ϕₘ) kombiniert (259) und steuern dann Modulationsmittel (26) digital, die am Ausgang FM-modulierte Chrominanzsignale (FM) abgeben;
- die kombinierten (259) Chrominanzsignale werden um zwei Zeilen verzögert (257) und um einen Betrag von π phasenverschoben;
- die zeitlich integrierten (24) Chrominanzsignale werden von den verzögerten (257) und in der Phase verschobenen (255) kombinierten Chrominanzsignalen subtrahiert (254) und bilden ein Phasenkorrektursignal (Δϕ);
- dieses Phasenkorrektursignal und ein Eingangssignal 'null' werden unter Steuerung durch Detektiermittel (23) für das Farbübersprechen weich geschaltet (253), die auf die Luminanz (Y) des SECAM-Signals wirken, wobei das Ausgangssignal der weichen Umschaltung das modifizierte Phasenkorrektursignal (ϕₘ) darstellt.

2. Verfahren nach Anspruch 1,
dadurch gekennzeichnet, daß
das weiche Umschalten (253) auch durch gleichphasige Detektormittel (251) gesteuert wird, deren Eingangssignale die zeitlich intergrierten (24) Chrominanzsignale und die verzögerten (257) und kombinierten (259) Chrominanzsignale sind.

3. Verfahren nach Anspruch 1 oder 2,
dadurch gekennzeichnet, daß
das modifizierte Phasenkorrektursignal (ϕₘ) tiefpaßgefiltert wird (256), wodurch Phasensprünge beseitigt werden.

4. Verfahren nach einem der Ansprüche 1 bis 3,
dadurch gekennzeichnet, daß
das Luminanzsignal (Y) vor der Zuführung zu den Detektormitteln für das Farbübersprechen (23) tiefpaßgefiltert wird (22).

5. Verfahren nach einem der Ansprüche 1 bis 4,
dadurch gekennzeichnet, daß
das Luminanzsignal (Y) durch Unterdrücken von hohen diagonal-räumlichen Frequenzen vorgefiltert wird (21).

6. Verfahren nach einem der Ansprüche 1 bis 5,
dadurch gekennzeichnet, daß
in einer folgenden SECAM-Dekodierung eine Nachfilterung mit einer Kennlinie erfolgt, die der Vorfilterung (21) entspricht.

7. Vorrichtung für eine verbesserte SECAM-Kodierung, in der ein FM-Modulator (166, 20) Chrominanzsignale (Dᵣ, D_{b}) auf Farbträger moduliert, gemäß einem Verfahren nach einem der Ansprüche 1 bis 6, enthaltend:
- zeitliche Integriermittel (24) und darauffolgende Kombiniermittel (259), in denen die Chrominanzsignale (Dᵣ, D_{b}) zeitlich integriert und mit einem modifizierten Phasenkorrektursignal (ϕₘ) kombiniert werden und dann Modulationsmittel (26) digital steuern, die am Ausgang FM-modulierte Chrominanzsignale (FM) abgeben;
- Verzögerungsmittel (257) und Mittel zur Phasenverschiebung (255), in denen die kombinierten (259) Chrominanzsignale um zwei Zeilen verzögert und in der Phase um einen Betrag von π verschoben werden;
- Subtrahiermittel (254), in denen die zeitlich integrierten (24) Chrominanzsignale von den verzögerten (257) und phasenverschobenen (255) kombinierten Chrominanzsignalen subtrahiert werden und ein Phasenkorrektursignal (Δϕ) bilden;
- weiche Schaltmittel (253), in denen das Phasenkorrektursignal und ein Eingangssignal 'null' unter der Steuerung von Farbübersprech-Detektormitteln (23) weich geschaltet werden, die auf die Luminanz (Y) des SECAM-Signals wirken, wobei das Ausgangssignal der Mittel zum weichen Schalten das modifizierte Phasenkorrektursignal (ϕₘ) ist.

8. Vorrichtung nach Anspruch 7,
dadurch gekennzeichnet, daß
die Mittel (253) zum weichen Schalten außerdem durch phasengleiche Detektiermittel (251) gesteuert werden, deren Eingangssignale die zeitlich integrierten (24) Chrominanzsignale und die verzögerten (257) und kombinierten (259) Chrominanzsignale sind.

9. Vorrichtung nach Anspruch 7 oder 8,
dadurch gekennzeichnet, daß
das modifizierte Phasenkorrektursignal (ϕₘ) in Tiefpaß-Filtermitteln (256) gefiltert wird, wodurch Phasensprünge beseitigt werden.

10. Vorrichtung nach einem der Ansprüche 7 bis 9, enthaltend Bandpaß-Filtermittel (22) in denen das Luminanzsignal (Y) vor dem Eintritt in die Detektiermittel (23) für das Farbübersprechen bandpaßgefiltert wird.

11. Vorrichtung nach einem der Ansprüche 7 bis 10, enthaltend Vor-Filtermittel (21), in denen das Luminanzsignal (Y) durch Unterdrückung von hohen diagonalen räumlichen Frequenzen vorgefiltert wird.

## Revendications

1. Méthode de codage SECAM amélioré, dans laquelle un modulateur FM (166, 20) module des signaux de chrominance (Dᵣ, D_{b}) sur des porteuses de couleur,
caractérisée par les étapes suivantes:
- lesdits signaux de chrominance (Dᵣ, D_{b}) sont temporellement intégrés (24) et combinés (259) à un signal de correction de phase modifié (ϕₘ) et commandent ensuite numériquement des moyens de modulation (26) qui produisent des signaux de chrominance à modulation FM (FM);
- les signaux de chrominance combinés (259) sont retardés (257) par deux lignes et déphasés par une quantité de π;
- les signaux de chrominance temporellement intégrés (24) sont soustraits (254) des signaux de chrominance combinés retardés (257) et déphasés (255) et forment un signal de correction de phase (Δϕ);
- ce signal de correction de phase et un signal d'entrée "zéro" sont commutés temporairement (253) sous la commande de moyens de détection de diaphotie luminance-chrominance (23) qui fonctionnent sur la luminance (Y) du signal SECAM, dans laquelle la sortie de commutation temporaire est ledit signal de correction de phase modifié (ϕₘ).

2. Méthode selon la revendication 1, caractérisée en ce que ladite commutation temporaire (253) est aussi commandée par des moyens de détection de phase égale (251), dont les signaux d'entrée sont lesdits signaux de chrominance temporellement intégrés (24) et lesdits signaux de chrominance retardés (257) et combinés (259).

3. Méthode selon la revendication 1 ou 2, caractérisée en ce que ledit signal de correction de phase modifié (ϕₘ) est filtré par un filtre passe-bas (256), par laquelle les sauts de phase sont supprimés.

4. Méthode selon l'une quelconque des revendications 1 à 3, caractérisée en ce que ledit signal de luminance (Y) est filtré par un filtre passe-bande (22) avant d'entrer dans lesdits moyens de détection de diaphotie luminance-chrominance (23).

5. Méthode selon l'une quelconque des revendications 1 à 4, caractérisée en ce que ledit signal de luminance (Y) est pré-filtré (21) en supprimant les fréquences spatiales diagonales élevées.

6. Méthode selon l'une quelconque des revendications 1 à 5, caractérisée en ce que dans un décodage SECAM ultérieur un post-filtrage avec une caractéristique correspondant audit pré-filtrage (21) est effectué.

7. Appareil de codage SECAM amélioré, dans lequel un modulateur FM (166, 20) module des signaux de chrominance (Dᵣ, D_{b}) sur des porteuses de couleur, lié à une méthode selon l'une quelconque des revendications 1 à 6, et comprenant:
- des moyens d'intégration temporelle (24) et des moyens de combinaison ultérieurs (259) dans lesquels lesdits signaux de chrominance (Dᵣ, D_{b}) sont temporellement intégrés et combinés à un signal de correction de phase modifié (ϕₘ) et commandent ensuite numériquement des moyens de modulation (26) qui produisent des signaux de chrominance à modulation FM (FM);
- des moyens de retard (257) et des moyens de déphasage (255) dans lesquels les signaux de chrominance combinés (259) sont retardés par deux lignes et déphasés par une quantité de π;
- des moyens de soustraction (254) dans lesquels les signaux de chrominance temporellement intégrés (24) sont soustraits des signaux de chrominance combinés retardés (257) et déphasés (255) et forment un signal de correction de phase (Δϕ);
- des moyens de commutation temporaire (253) dans lesquels ce signal de correction de phase et un signal d'entrée "zéro" sont commutés temporairement sous la commande de moyens de détection de diaphotie luminance-chrominance (23) qui fonctionnent sur la luminance (Y) du signal SECAM, dans lequel le signal de sortie desdits moyens de commutation temporaire est ledit signal de correction de phase modifié (ϕₘ).

8. Appareil selon la revendication 7, caractérisé en ce que lesdits moyens de commutation temporaire (253) sont aussi commandés par des moyens de détection de phase égale (251), dont les signaux d'entrée sont lesdits signaux de chrominance temporellement intégrés (24) et lesdit signaux de chrominance retardés (257) et combinés (259).

9. Appareil selon la revendication 7 ou 8, caractérisé en ce que ledit signal de correction de phase modifié (ϕₘ) est filtré par un filtre passe-bas (256), par lequel les sauts de phase sont supprimés.

10. Appareil selon l'une quelconque des revendications 7 à 9, comprenant des moyens de filtrage passe-bande (22) dans lesquels ledit signal de luminance (Y) est filtré par filtre passe-bande avant d'entrer dans lesdits moyens de détection de diaphotie luminance-chrominance (23).

11. Appareil selon l'une quelconque des revendications 7 à 10, comprenant des moyens de pré-filtrage (21) dans lesquels ledit signal de luminance (Y) est pré-filtré en supprimant les fréquences spatiales diagonales élevées.
